Europäisches Patentamt

European Patent Office

Office européen des brevets

(11) Publication number: **0 419 688 A1**

# EUROPEAN PATENT APPLICATION

(21) Application number: 89117602.6

(51) Int. Cl.5: **H01M 6/14**

(22) Date of filing: 23.09.89

(43) Date of publication of application:
03.04.91 Bulletin 91/14

(84) Designated Contracting States:
CH DE FR GB LI NL

(71) Applicant: HONEYWELL INC.
Honeywell Plaza
Minneapolis Minnesota 55408(US)

(72) Inventor: Ebner, Walter B.
974 Donald Drive
Warminster Pennsylvania 18974(US)

(74) Representative: Rentzsch, Heinz et al
Honeywell Europe S.A. Holding KG Patent &
License Dept. Postfach 10 08 65
Kaiserleistrasse 39
W-6050 Offenbach am Main(DE)

(54) **High rate oxyhalide electrochemical cell systems.**

(57) The performance of active metal/thionyl chloride and sulfuryl chloride electrochemical cells is greatly enhanced by the addition of certain halogen or interhalogen compounds in conjunction with sulfur dioxide.

# HIGH RATE OXYHALIDE ELECTROCHEMICAL CELL SYSTEMS

## Field of the Invention

The present invention relates generally to non-aqueous electrochemical cells and, more particularly, to improvements in the high discharge rate performance of such cells having electrolytes including thionyl chloride or sulfuryl chloride.

## Description of the Prior Art

Active metal-oxyhalide systems and particularly lithium systems which include an electrolyte salt dissolved in an electrolyte solvent including thionyl chloride ($SOCl_2$) or sulfuryl chloride ($SO_2Cl_2$) have demonstrated the highest energy densities achieved to date by any electrochemical power source. Because of certain specialized needs for even higher energy density, higher discharge rate power sources, there exists a need to further increase the rate capabilities of these electrochemical systems. One way to accomplish this end is to add dopants to the electrolyte solution.

In the prior art, it is known to utilize an additive of iodine monochloride in a lithium/thionyl chloride cell having a very low discharge rate such as that utilized in a pacemaker. Such an additive is shown in U.S. Patent 4,259,420. The use of an additive selected from a group of compounds including sulfur dioxide in a similar electrochemical cell environment is illustrated and described in U.S. Patent 3,891,458. This and other prior art additives or dopants, however, have not accomplished the combined voltage and capacity enhancement which has been sought.

## SUMMARY OF THE INVENTION

According to the present invention, dramatic improvements have been achieved in the high rate capability of active metal oxyhalide cells by the addition of a combination of additives including sulfur dioxide and certain halogen or interhalogen compounds which greatly enhance both the capacity and the operating voltage of the cells.

This phenomenon has been found to exist in electrochemical systems including thionyl chloride or sulfuryl chloride as the electrolyte solvent. The performance of such electrochemical cells has been enhanced both as to specific capacity and voltage output by the addition of $Br_2 + SO_2$, $BrCl + SO_2$, and $Cl_2 + SO_2$.

The cells employing the improvement of the present invention consist of an active metal anode, the electrolyte, and a cathode including a current collector. While other active metals such as sodium, magnesium or calcium can be used, the preferred embodiments employ a lithium anode, an electrolyte including an electrolyte salt which may be a salt of the active metal such as lithium aluminum chloride ($LiAlCl_4$), an electrolyte salt such as $AlCl_3$, or a combination of such salts dissolved in the electrolyte solvent comprising thionyl chloride or sulfuryl chloride. The dopants or additive(s) in accordance with the present invention are also contained in the electrolyte solution.

## BRIEF DESCRIPTION OF THE DRAWINGS

In the drawings:
FIGURE 1 shows a comparative graph of discharge data for a lithium/thionyl chloride cell with and without certain of the additives in accordance with the invention;
FIGURE 2 is a comparison similar to that of FIGURE 1 for certain other additives;
FIGURE 3 depicts low temperature cell performance of a cell utilizing one additive combination in accordance with the invention; and
FIGURE 4 shows a comparative graph for a lithium/sulfuryl chloride cell with and without one additive combination.

## DESCRIPTION OF THE PREFERRRED EMBODIMENT

Electrochemical cells utilizing the lithium/thionyl chloride system were prepared and tested in the manner of the following examples 1-10.

### Examples 1-10

The undoped acid electrolyte solution was manufactured in a well known manner in a volumetric flask and had the following formulation:

$1.5M \ AlCl_3 \ + \ 0.5M \ LiAlCl_4/ \ SOCl_2$

Halogen/interhalogen compounds selected for evaluation were chlorine, bromine, bromine chloride and iodine chloride. Each of these materials was tested in the following examples with and without the presence of sulfur dioxide and the following additive concentrations were selected:

Halogen/interhalogen compounds: 1.8M

Sulfur dioxide: 5.5M

It should also be noted that small deviations in the concentrations of $SO_2$ and the halogen/interhalogens from the values of 5.5M and 1.8M do not appreciably offset performance and respectively occured simply from difficulties associated with accurately metering out small quantities of these gaseous materials.

Two-plate, flooded laboratory cells were employed for gathering the relevant data. The specific construction features of the cells utilized in these examples are summarized below.

Anode: 0.020 in. lithium foil pressed onto a nickel expanded metal current collector (3Ni10-125)

Cathode: 0.035 in. (nominal) 95/5 carbon electrodes using 100% compressed Schwanigan Acetylene Black (SAB) pressed onto the collector at 125 psi.

Cathode Collector: 3Ni10-125 expanded metal spot welded to 5 mil nickel foil

Separator: Two layers of 0.005 in. Manninglas 1400

Electrolyte Volume: Approximately 15 ml

Retainers: Wire twistlocs (snug)

The cells were allowed several minutes of open circuit stand time prior to testing to ensure complete activation. These times ranged from 5-21 minutes.

The electrolyte screening evaluations were conducted under the following test conditions.

Test Mode: Constant Current

Current Density: 30 $mA/cm^2$

Temperature: Ambient (approximately 25° C)

Table I summarizes the test results for examples 1-10. As can be seen, dramatic improvements in the delivered capacity as well as in the operating voltage were achieved with almost all of the electrolyte additive combinations with $SO_2$. The solutions doped with ICl, however, performed rather erratically. Postmorten analysis revealed a crystalline precipitate on the separators indicating a solubility problem. As a result, ICl is not presently considered a viable candidate for improving overall high-rate performance. The specific capacity of the cells was measured utilizing the time the cell discharged above a potential of 2.0 volts and the average voltage was computed based on the discharge above 2.0 volts.

## TABLE I

| LITHIUM/THIONYL CHLORIDE CELLS | | | |
|---|---|---|---|
| | | Difference in Specific Capacity From Baseline Solution | Difference in Specific Capacity From Baseline Solution |
| | Dopant | % | mv |
| 1 | Baseline | 0 | 0 |
| 2 | $Br_2$ | 37.9 | 334 |
| 3 | $Br_2 + SO_2$ | 82.4 | 315 |
| 4 | $SO_2$ | 60.8 | 4 |
| 5 | BrCl | 64.3 | 265 |
| 6 | $BrCl + CO_2$ | 104.9 | 207 |
| 7 | $Cl_2$ | 119.9 | 270 |
| 8 | $Cl_2 + SO_2$ | 94.0 | 8 |
| 9 | ICl | -33.7 | 217 |
| 10 | $ICl + SO_2$ | -28.7 | 61 |

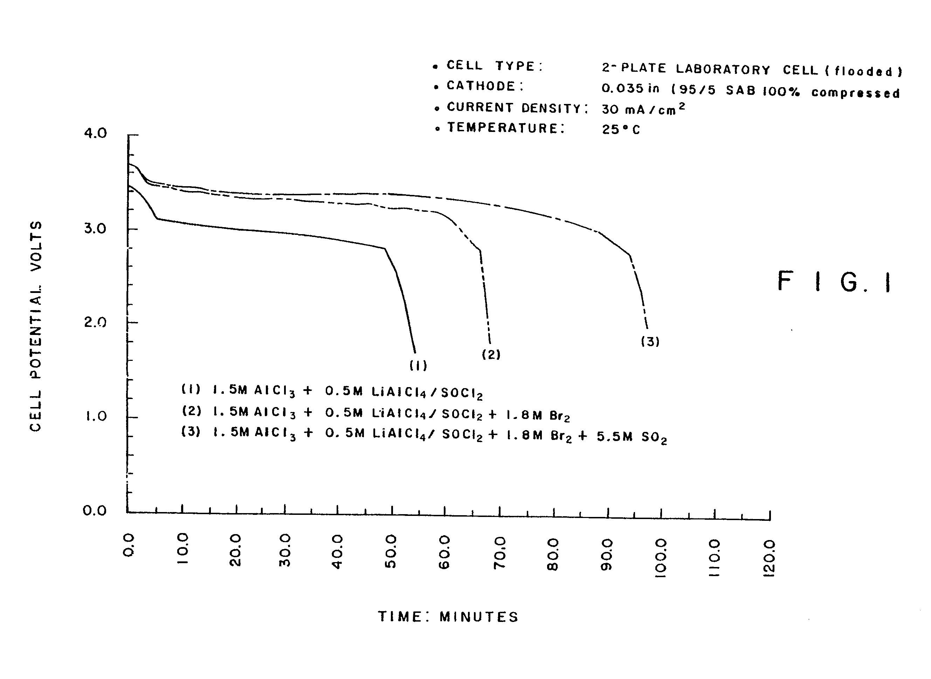

FIGURE 1 is a draft of time of cell discharge versus cell potential for cell discharge data carrying the undoped basic cell (1) with the same cell doped with $Br_2$ (2) and one doped with the combined additives of $Br_2$ and $SO_2$ (3). The effect of the combination of additives in curve (3) is very noticeable. The curves, as in Table 1, carry the discharge of the cell to the point where the cell potential drops to approximately 2.0 volts.

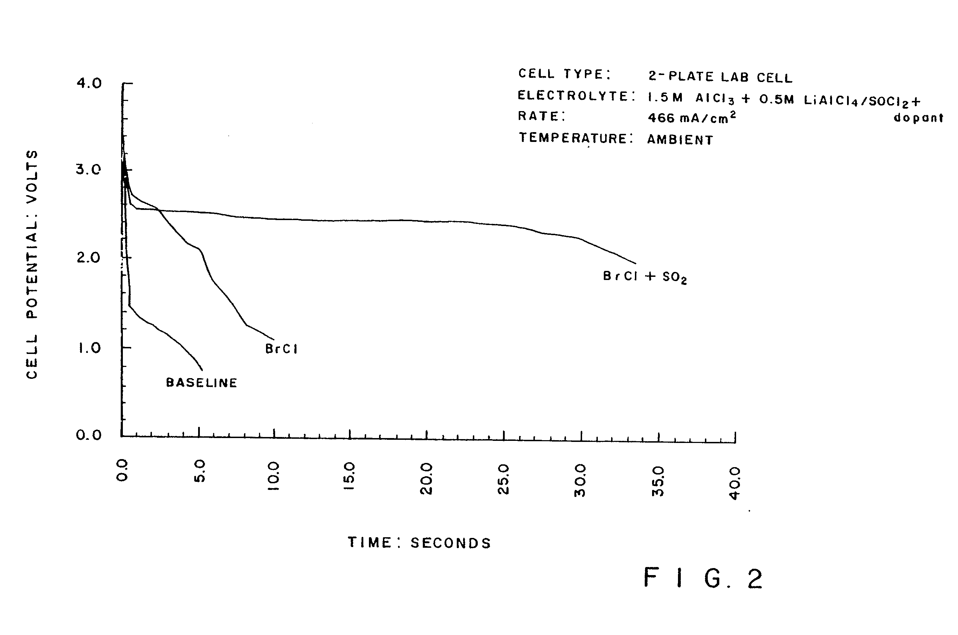

FIGURE 2 is a curve similar to FIGURE 1 utilizing the additives BrCl and $BrCl + SO_2$ utilizing a very high discharge rate of 466 mA/cm. This again shows a dramatic improvement over prior cells by the utilization of the combined additives to achieve a very high discharge rate. That cell was operated at a 1.5A constant current condition.

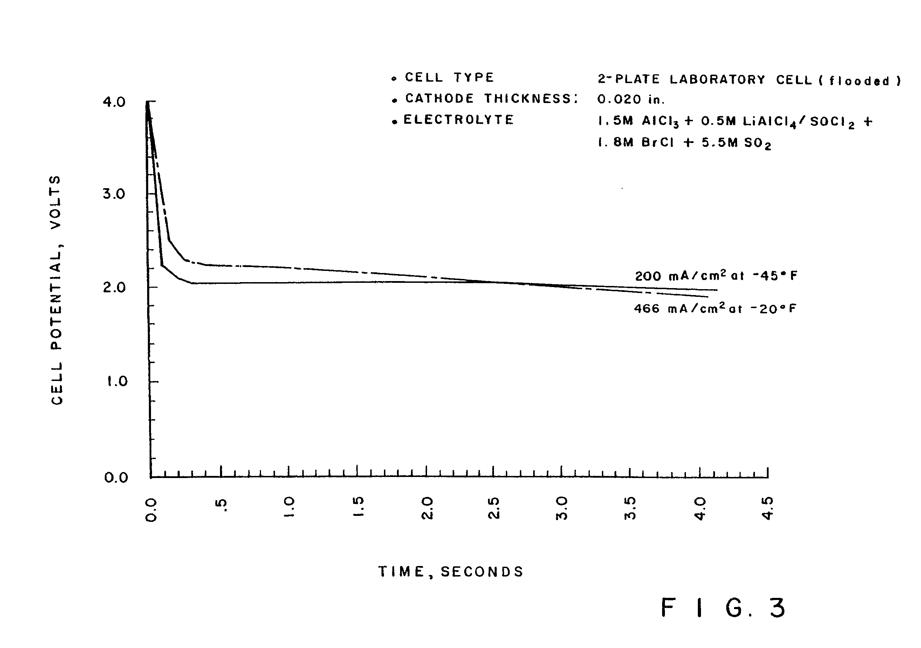

FIGURE 3 again depicts the $BrCl + SO_2$ additive system showing that such a system can maintain a current of about 450 miliamps per square centimeter at the low temperature of -29°C and a current as high as 200 miliamps per square centimeter at a temperature as low as -43°C. This is a far higher discharge rate at such low temperatures than has been possible with cells not utilizing the additive combination of the present invention.

## Examples 11-13

In Examples 11-13 the lithium/sulfuryl chloride system was used. A neutral electrolyte solution incorporating a 1.5M lithium aluminum chloride ($LiAlCl_4$) was employed in all cases. The undoped baseline cell was compared with same electrolyte containing 1.8M $Br_2 + 5.7M$ $SO_2$.

The cell construction was the same as that utilized for the cells in examples 1-10. As in the case of Examples 1-10, the cells were allowed several minutes of open circuit stand time prior to testing to insure complete activation. These times ranged from 5 to 16 minutes.

The results of the enhancement of both the specific capacity and the average voltage for Examples 11-13 are shown in Table II.

TABLE II

| LITHIUM/SULFURYL CHLORIDE CELLS | | | |
|---|---|---|---|
| | | Difference in Specific Capacity From Baseline Solution | Difference in Specific Capacity From Baseline Solution |
| | Dopant | % | mv |
| 11 | Baseline | 0 | 0 |
| 12 | $Br_2$ + $SO_2$ (1) | 16.8 | 647 |
| 13 | $Br_2$ + $SO_2$ (2) | 22.6 | 648 |

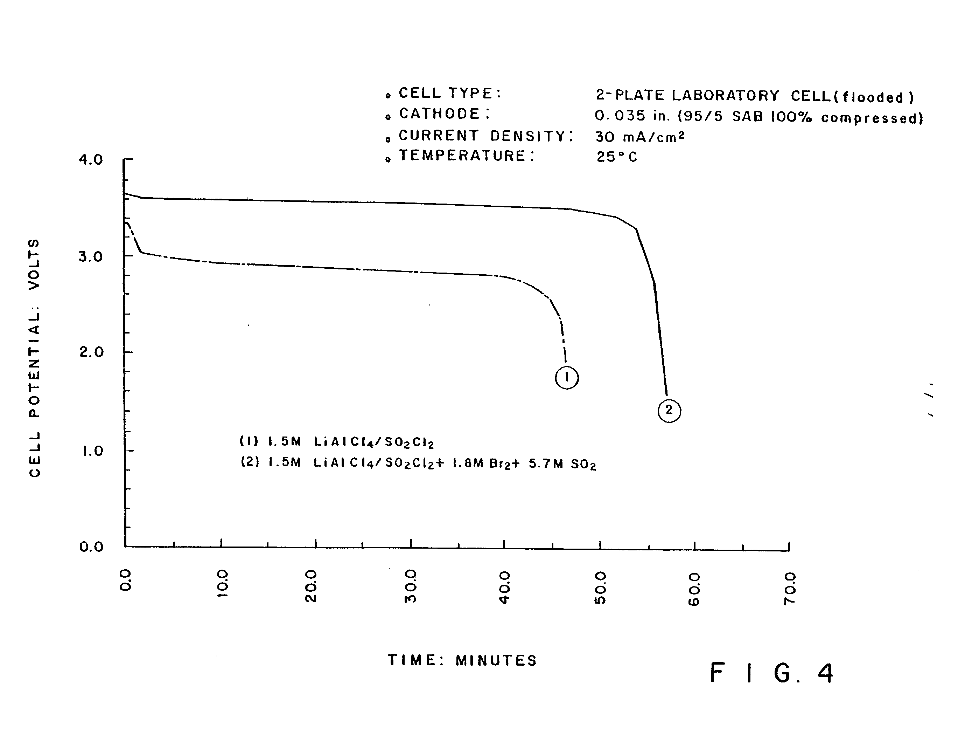

FIGURE 4 depicts a graph of a comparative discharge data showing the undoped (1) and the solution with the combined additives (2). The block of a discharge data showing the combined additives is based on an average value between Examples 12 & 13.

## Claims

1. In an electrochemical cell comprising an oxidizable active metal anode, a cathode and an electrolyte including an electrolyte solvent selected from the group consisting of thionyl chloride and sulfuryl chloride and an amount of at least one electrolyte salt dissolved in said electrolyte solvent, the improvement comprising an amount of sulfur dioxide and an amount of a halogen or interhalogen compound selected from the group consisting of $Br_2$, $Cl_2$ and BrCl in said electrolyte.

2. The cell of claim 1 wherein said solvent is sulfuryl chloride and said halogen or interhalogen compound is $Br_2$.

3. The cell of claim 1 wherein said electrolyte solvent is thionyl chloride.

4. The cell of claim 1, 2 or 3, wherein said oxidizable active metal is lithium.

5. The cell of claim 4 wherein the concentration of said sulfur dioxide is approximately 5.5M based on said electrolyte solvent and wherein the concentration of said halogen or interhalogen compound is approximately 1.8M based on said electrolyte solvent.

6. The cell of claim 5 wherein said electrolyte solvent is sulfuryl chloride and said halogen or interhalogen compound is $Br_2$.

7. The cell of claim 6 wherein said at least one dissolved salt of said oxidizable active metal is $LiAlCl_4$.

8. The cell of claim 7 wherein the concentration of said at least one dissolved salt of said oxidizable active metal is approximately 1.5M based on said electrolyte solvent.

9. The cell of claims 3 and 4 wherein said dissolved salt of said oxidizable active metal comprises a combination of $AlCl_3$ and $LiAlCl_4$.

10. The cell of claim 9 wherein the concentration of said $AlCl_3$ is approximately 1.5M based on said thionyl chloride and the concentration of said $LiAlCl_4$ is approximately 0.5M.

11. The cell of claim 10 wherein said halogen or interhalogen compound is $Br_2$.

12. The cell of claim 10 wherein said halogen or interhalogen compound is BrCl.

- CELL TYPE:        2-PLATE LABORATORY CELL (flooded)
- CATHODE:          0.035 in (95/5 SAB 100% compressed
- CURRENT DENSITY:  30 mA/cm$^2$
- TEMPERATURE:      25°C

F I G. 1

(1) 1.5M AlCl$_3$ + 0.5M LiAlCl$_4$/SOCl$_2$

(2) 1.5M AlCl$_3$ + 0.5M LiAlCl$_4$/SOCl$_2$ + 1.8M Br$_2$

(3) 1.5M AlCl$_3$ + 0.5M LiAlCl$_4$/SOCl$_2$ + 1.8M Br$_2$ + 5.5M SO$_2$

CELL POTENTIAL VOLTS

TIME: MINUTES

EP 0 419 688 A1

CELL TYPE: 2-PLATE LAB CELL

ELECTROLYTE: 1.5M $AlCl_3$ + 0.5M $LiAlCl_4/SOCl_2$+

RATE: 466 $mA/cm^2$     dopant

TEMPERATURE: AMBIENT

$BrCl + SO_2$

BrCl

BASELINE

CELL POTENTIAL: VOLTS

TIME: SECONDS

F I G. 2

EP 0 419 688 A1

- CELL TYPE               2-PLATE LABORATORY CELL (flooded)
- CATHODE THICKNESS:   0.020 in.
- ELECTROLYTE          $1.5M\ AlCl_3 + 0.5M\ LiAlCl_4 / SOCl_2 +$ $1.8M\ BrCl + 5.5M\ SO_2$

200 mA/cm$^2$ at $-45°$F

466 mA/cm$^2$ at $-20°$F

CELL POTENTIAL, VOLTS

TIME, SECONDS

F I G. 3

EP 0 419 688 A1

FIG. 4

CELL POTENTIAL: VOLTS (y-axis)
TIME: MINUTES (x-axis)

∘ CELL TYPE: 2-PLATE LABORATORY CELL(flooded)
∘ CATHODE: 0.035 in. (95/5 SAB 100% compressed)
∘ CURRENT DENSITY: 30 mA/cm²
∘ TEMPERATURE: 25°C

(1) 1.5M LiAlCl₄/SO₂Cl₂
(2) 1.5M LiAlCl₄/SO₂Cl₂+ 1.8M Br₂+ 5.7M SO₂

EP 0 419 688 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 842 967 (MICHAEL BINDER) * Abstract; column 1, line 63 - column 2, line 32 * | 1-6 | H 01 M 6/14 |
| A | PATENT ABSTRACTS OF JAPAN, vol. 9, no. 10 (E-290)[1733], 17th January 1985; & JP-A-59 160 972 (TOSHIBA K.K.) 11-09-1984 * Whole document * | 1,3,4 | |
| D,A | US-A-3 891 458 (MORRIS EISENBERG) * Abstract * | 1 | |
| A | JOURNAL OF THE ELECTROCHEMICAL SOCIETY, vol. 134, no. 9, September 1987, pages 2112-2118, Manchester, NH, US; K.M. ABRAHAM et al.: "Spectroscopic and electrochemical studies on some halogens and interhalogens in SOCl2" * Pages 2112,2115,2116 * | 1-4 | |
| A | EP-A-0 232 806 (S.A.F.T.) * Abstract; page 3, line 25 - page 4, line 26 * | 1-4 | TECHNICAL FIELDS SEARCHED (Int. Cl.5)<br><br>H 01 M 6/14<br>H 01 M 10/36 |
| A | JOURNAL OF POWER SOURCES, vol. 21, no. 2, September 1987, pages 143-149, Elsevier Sequioa, Lausanne, CH; R.J. MAMMONE et al.: "Li/SO2 rechargeable cells containing added bromine" * Whole document * | 1-6 | |

The present search report has been drawn up for all claims

| Place of search | Date of completion of the search | Examiner |
|---|---|---|
| THE HAGUE | 30-05-1990 | DE VOS L.A.R. |